Europäisches Patentamt

European Patent Office

Office européen des brevets

(11) Publication number: **0 678 356 A1**

## EUROPEAN PATENT APPLICATION
## published in accordance with Art. 158(3) EPC

(21) Application number: 94929021.7

(22) Date of filing: **07.10.94**

(86) International application number:
**PCT/JP94/01686**

(87) International publication number:
**WO 95/10382 (20.04.95 95/17)**

(51) Int. Cl.6: **B23H 1/02**

(30) Priority: **13.10.93 JP 278859/93**

(43) Date of publication of application:
**25.10.95 Bulletin 95/43**

(84) Designated Contracting States:
**CH DE LI**

(71) Applicant: **FANUC LTD.**
**3580, Shibokusa Aza-Komanba, Oshino-mura**
**Minamitsuru-gun,**
**Yamanashi 401-05 (JP)**

(72) Inventor: **SAKURAI, Akihiro Fanuc Dai-3**
**Vira-karamatsu**
**3527-1, Shibokusa**
**Oshino-mura**
**Minamitsuro-gun**
**Yamanashi 401-05 (JP)**

(74) Representative: **Billington, Lawrence Emlyn et al**
**HASELTINE LAKE & CO**
**Hazlitt House**
**28 Southampton Buildings**
**Chancery Lane**
**London WC2A 1AT (GB)**

(54) CONCENTRATED ELECTRIC DISCHARGE JUDGEMENT METHOD AND APPARATUS FOR WIRE ELECTRIC DISCHARGE MACHINES.

(57) In a wire electric discharge machine constructed so that an electric current is supplied from the upper and lower sides of a work (2) to a wire electrode (1) through current supply elements (4, 5), a concentrated electric discharge judgement method and apparatus are provided, which are provided with means (6, 7) for detecting the current flowing in these two current supply elements (4, 5), a means (8) for detecting a total discharge current, and means (9-19) for detecting a difference between discharge positions of two consecutive electric discharge operations by using outputs from the current detecting means (6, 7) and an output from the total current detecting means (8), which outputs are obtained by two consecutive discharge operations, a concentrated electric discharge judgement apparatus being formed which is adapted to judge concentrated electric discharge on the basis of the outputs from the discharge position difference detecting means, the mentioned method and apparatus being capable of detecting the presence and absence of concentrated discharge by using a smaller number of structural elements; reduced numbers of comparators and reference voltage sources.

EP 0 678 356 A1

EP 0 678 356 A1

F I G. 5

Legend:

1: WIRE ELECTRODE
2: WORKPIECE
4: UPPER ENERGIZING CONTACT
5: LOWER ENERGIZING CONTACT
6,7,8: CURRENT DETECTION MEANS
9,10: DIVIDER
11 TO 14: PEAK HOLD CIRCUIT

15,16,25: ADDER
17,18: DIODE
19: SUBTRACTER
20: COMPARATOR
21: FLIP-FLOP
22,23: AND GATE

DISCHARGE CONTROL SIGNAL

RESET SIGNAL

## Technical Field

The present invention relates to a wire electric discharge machine, and in particular, to a method and apparatus for detecting a discharge position between a workpiece and a wire electrode in a wire electric discharge machine. More particularly, the present invention relates to a convergence discharge discrimination method and apparatus for discriminating the presence of a convergence discharge caused by a discharge generated at the same position on a wire electrode.

## Background Art

In a wire electric discharge machine, there is a case where a discharge is generated at the same position on a wire electrode, a so-called convergence discharge occurs.

Conventionally, there is an apparatus for detecting the presence of convergence discharge in a wire electric discharge machine, for example, an apparatus disclosed in Japanese Patent Laid-open Publication (Kokai) No. 1-121127, has been known. The apparatus detects the presence of convergence discharge by observing a change in a discharge position. More specifically, to attain this detection, there is provided a discharge position detector circuit having a configuration in which energizing contacts are located above and below a workpiece with respect to a wire electrode of a wire electric discharge machine, and a current is supplied to the wire electrode through each energizing contact. In starting a discharge, a plurality of comparators compare the difference between a differential value of a current flowing through the upper energizing contact and a differential value of a current flowing through the lower energizing contact. Subsequently, the presence of convergence discharge is detected by observing whether or not a similar comparative result continuously appears.

The conventional method and apparatus adopt the principle that the difference between a differential value of a current flowing through the upper energizing contact and a differential value of a current flowing through the lower energizing contact is proportional to a discharge position in starting a discharge.

However, the following problems are arisen in the conventional convergence discharge discrimination method and apparatus in a wire electric discharge machine.

The foregoing conventional discharge position detector circuit has a configuration in which a plurality of comparators compare the difference between a differential value of a current flowing through the upper energizing contact and a differential value of a current flowing through the lower energizing contact. For this reason, there is arisen a problem in that the above circuit requires locating a large number of comparators. Also, in order to drive these many comparators, there is arisen a problem in that many reference voltage sources individually having a different reference voltage must be prepared.

## Disclosure of the Invention

An object of the present invention is to provide a method and apparatus, which are capable of reducing components such as a comparator and a reference voltage source, and detecting the presence of convergence discharge by a small number of components.

Another object of the present invention is to provide a convergence discharge discrimination methods and apparatus in a wire electric discharge machine, which does not need many comparators.

Still another object of the present invention is to provide a convergence discharge discrimination method and apparatus in a wire electric discharge machine, which does not need a plurality of reference voltage sources individually having a different reference voltage required for making a comparison.

The convergence discharge discrimination apparatus of the present invention is applied to a wire electric discharge machine which is constituted so that a current is supplied to a wire electrode through each of energizing contacts above and below a workpiece. The apparatus includes energizing contact current detection means for detecting a current flowing through each of the above two energizing contacts, total current detection means for detecting the total discharge current flowing through the wire electrode, and discharge positional difference detection means for detecting the deference in a position where a discharge is continuously generated two time, on the basis of an output of the energizing contact current detection means and an output of the time a discharge is continuously generated two times. The presence of convergence discharge is discriminated according to an output of the above discharge positional difference detection means.

In the convergence discharge discriminating apparatus of the present invention, more specifically, the foregoing discharge positional difference detection means has a function of executing an operation of the sum of a value obtained by dividing an output of one energizing contact current detection means according to a first discharge by an output of the total current detection means, and a value obtained by dividing an output of the other energizing contact current detection means according to a second discharge by an output of the total current detection means. Thus, an output obtained from the operation function described above is used for detecting the difference in a position where a discharge is continuously generated two times.

Also, the convergence discharge discrimination method of the present invention is applied to a wire electric discharge machine which is constituted so that a current is supplied to a wire electrode through energizing contacts located above and below a workpiece. When a discharge is continuously generated two times, a discharge current flowing through one of two energizing contacts according to the first discharge and a discharge current flowing through the other of them according to the second discharge are detected, and based on the detected discharge current, the difference in a discharge position where a discharge is continuously generated two times, is detected. And then, based on the detected difference in a discharge position where a discharge is continuously generated two times, the presence of convergence discharge is discriminated.

In the present invention, the first and second discharges shows either of two-time continuous discharges, and does not show the order of discharge. Also, one energizing contact current detection means and the other energizing contact current detection means show either of two energizing contacts located above and below a wire electrode, and are not limited to any one of these energizing contacts.

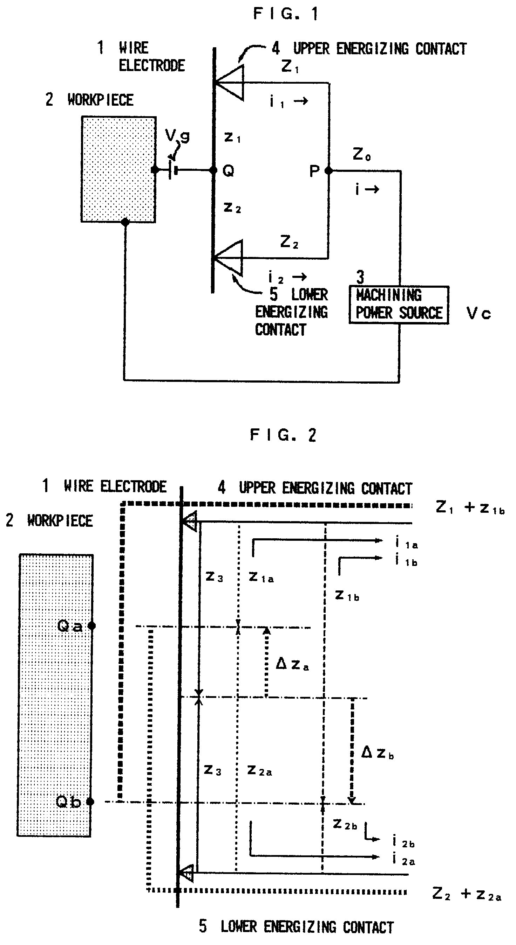

Fig. 1 is a circuit diagram for explaining the principle of the present invention. In Fig. 1, a reference number 1 denotes a wire electrode, a reference number 2 denotes a workpiece, and a reference number 3 denotes a machining power source turning on/off. One output terminal of the machining power source 3 is connected to the wire electrode 1 through the upper energizing contact 4 and the lower energizing contact 5, and the other output terminal of the machining power source 3 is connected to the workpiece 2.

In Fig. 1, the relationship in an impedance in a wire electric discharge machine is determined as follows. A symbol $Z_0$ is set as an impedance of a lead wire from the workpiece 2 to the machining power source 3, and from the machining power source 3 to a branch point P on a lead wire extending to the upper and lower energizing contacts 4 and 5. A symbol $Z_1$ is set as an impedance from the branch point P to the upper energizing contact 4, and $Z_2$ is set as an impedance from the branch point P to the lower energizing contact 5. A symbol $z_1$ is set as an impedance of the wire electrode 1 from the upper energizing contact 4 to a discharge position Q, and a symbol $z_2$ is set as an impedance of the wire electrode 1 from the lower energizing contact 5 to the discharge position Q.

Moreover, Vc shows an output voltage from the machining power source 3, and Vg shows a gap voltage between the wire electrode 1 and the workpiece 2 when a discharge is generated between the wire electrode 1 and the workpiece 2 at the discharge position Q. A symbol $i_1$ is set as a discharge current flowing through the upper energizing contact 4, and a symbol $i_2$ is set as a discharge current flowing through the lower energizing contact 5. A symbol "i" shows a total discharge current added the discharge currents $i_1$ and $i_2$ together.

In Fig. 1, a closed circuit is constituted by the machining power source 3, workpiece 2, wire electrode 1, upper energizing contact 4 and machining power source 3. The closed circuit can be represented by the following equation (1) on the basis of the foregoing preset conditions.

$$Vc = Z_0 i + (Z_1 + z_1) i_1 + Vg \qquad (1)$$

Moreover, another closed circuit is constituted by the machining power source 3, workpiece 2, wire electrode 1, lower energizing contact 5 and machining power source 3, in the like manner. Another closed circuit can be represented by the following equation (2).

$$Vc = Z_0 i + (Z_2 + z_2) i_2 + Vg \qquad (2)$$

An equation (3) obtained from the above equations (1) and (2) represents the relationship between the discharge currents $i_1$ and $i_2$.

$$(Z_1 + z_1) i_1 = (Z_2 + z_2) i_2 \qquad (3)$$

The discharge current $i_1$ flowing through the upper energizing contact 4 is represented by the following equation (4) obtained by transforming the above equation (3).

$$i_1 = i_2 \cdot (Z_2 + z_2)/(Z_1 + z_1) \qquad (4)$$

4

The discharge current $i_2$ flowing through the lower energizing contact 5 is represented by the following equation (5).

$$i_2 = i_1 \cdot (Z_1 + z_1)/(Z_2 + z_2) \tag{5}$$

In this case, the total discharge current "i" is represented by the following equation (6).

$$i = i_1 + i_2 \tag{6}$$

Then, the following equation (7) is obtained by substituting the discharge current $i_2$ flowing through the lower energizing contact 5, represented by the equation (5), for the above equation (6). The equation (7) is used for obtaining the total discharge current "i" by using the discharge current $i_1$.

$$i = i_1 + i_1 \cdot (Z_1 + z_1)/(Z_2 + z_2) = i_1 \cdot (Z_2 + z_2 + Z_1 + z_1)/(Z_2 + z_2) \tag{7}$$

If the above equation (7) is transformed, the discharge current $i_1$ flowing through the upper energizing contact 4 is represented by the following equation (8).

$$i_1 = i \cdot (Z_2 + z_2)/(Z_2 + z_2 + Z_1 + z_1) \tag{8}$$

The discharge current $i_2$ flowing through the upper energizing contact 5 is represented by the following equation (9) in the like manner.

$$i_1 = i \cdot (Z_1 + z_1)/(Z_2 + z_2 + Z_1 + z_1) \tag{9}$$

Then, if the equations (8) and (9) are divided by the total discharge current "i", the following equations (10) and (11) are obtained.

$$i_1/i = (Z_2 + z_2)/(Z_2 + z_2 + Z_1 + z_1) \tag{10}$$
$$i_2/i = (Z_1 + z_1)/(Z_2 + z_2 + Z_1 + z_1) \tag{11}$$

According to the above equation (10), a value, in which the discharge current $i_1$ flowing through the upper energizing contact 4 is divided by the total discharge current "i", is equal to a ratio of an impedance $(Z_2 + z_2)$ from the branch point P to the discharge position Q through the lower energizing contact 5, to an impedance $(Z_2 + z_2 + Z_1 + z_1)$ of a closed circuit constituted by returning to the branch point P from the branch point P through the upper energizing contact 4 and the lower energizing contact 5. The impedance ratio can be calculated regardless of the magnitude of the discharge current $i_1$.

According to the above equation (11), a value, in which the discharge current $i_2$ flowing through the lower energizing contact 5 is divided by the total discharge current "i", is equal to a ratio of an impedance $(Z_2 + z_2)$ from the branch point P to the discharge position Q through the lower energizing contact 5, to an impedance $(Z_2 + z_2 + Z_1 + z_1)$ of a closed circuit constituted by returning to the branch point P from the branch point P through the upper energizing contact 4 and the lower energizing contact 5. The impedance ratio can be calculated regardless of the magnitude of the discharge current $i_2$.

Fig. 2 is a view showing the impedance relation at the time a discharge is generated, showing an impedance in the case where a discharge is generated at different positions Qa and Qb. In this case, the time when a discharge is generated at the discharge positions Qa and Qb is different.

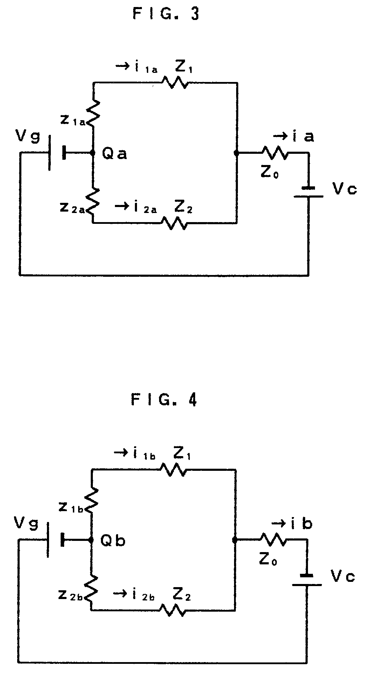

Symbols $z_{1a}$ and $z_{2a}$ are set as an impedance of the wire electrode 1 between the upper energizing contact 4 and the discharge position Qa and as an impedance of the wire electrode 1 between the lower energizing contact 5 and the discharge position Qa, respectively, in the case where a discharge is generated at the discharge position Qa. At this time, currents flowing through the upper and lower energizing contacts 4 and 5 are set as $i_{1a}$ and $i_{2a}$, respectively, and the total discharge current is set as "ia" $(= i_{1a} + i_{2a})$. Fig. 3 shows a closed circuit in the case where a discharge is generated at the discharge position Qa.

If the above equations (10) and (11) are applied to the closed circuit in the case of the discharge position Qa, the following equations (12) and (13) are obtained.

$$i_{1a}/i_a = (Z_2 + z_{2a})/(Z_2 + z_{2a} + Z_1 + z_{1a}) \tag{12}$$

5

$$i_{2a}/i_a = (Z_1 + z_{1a})/(Z_2 + z_{2a} + Z_1 + z_{1a}) \tag{13}$$

Symbols $z_{1b}$ and $z_{2b}$ are set as an impedance of the wire electrode 1 between the upper energizing contact 4 and the discharge position Qb and as an impedance of the wire electrode 1 between the lower energizing contact 5 and the discharge position Qb, respectively, in the case where a discharge is generated at the discharge position Qb. Currents flowing through the upper and lower energizing contacts 4 and 5 at this time are individually set as $i_{1b}$ and $i_{2b}$, and the total discharge current is set as "ib" (= $i_{1b}$ + $i_{2b}$). Fig. 4 shows a closed circuit in the case where a discharge is generated at the discharge position Qb.

If the above equations (10) and (11) are applied to the closed circuit in the case of the discharge position Qb, the following equations (14) and (15) are obtained.

$$i_{1b}/i_b = (Z_2 + z_{2b})/(Z_2 + z_{2b} + Z_1 + z_{1b}) \tag{14}$$
$$i_{2b}/i_b = (Z_1 + z_{1b})/(Z_2 + z_{2b} + Z_1 + z_{1b}) \tag{15}$$

In Fig. 2, a symbol $z_3$ is set as an impedance to the intermediate point of the wire electrode 1 from the upper and lower energizing contacts 4 and 5. A symbol $\Delta z_a$ is set as an impedance from the intermediate point to the discharge position Qa, and a symbol $\Delta z_b$ is set as an impedance from the intermediate point to the discharge position Qb.

At this time, an impedance $z_{2a}$ of the wire electrode 1 between the lower energizing contact 5 and the discharge position Qa is represented by the following equation (16).

$$z_{2a} = z_3 + \Delta z_a \tag{16}$$

Also, an impedance $z_{1b}$ of the wire electrode 1 between the lower energizing contact 4 and the discharge position Qb is represented by the following equation (17).

$$z_{1b} = z_3 + \Delta z_b \tag{17}$$

If the above equations (16) and (17) are substituted for the equations (12) and (15), respectively, the following equations (18) and (19) are obtained.

$$i_{1a}/i_a = (Z_2 + z_3 + \Delta z_a)/(Z_2 + z_{2a} + Z_1 + z_{1a}) \tag{18}$$
$$i_{2b}/i_b = (Z_1 + z_3 + \Delta z_b)/(Z_2 + z_{2b} + Z_1 + z_{1b}) \tag{19}$$

Further, if the above equations (18) and (19) added together, the following equation (20) is obtained.

$$i_{1a}/i_a + i_{2b}/i_b = \{(Z_2 + z_3 + \Delta z_a)/(Z_2 + z_{2a} + Z_1 + z_{1a})\} + \{(Z_1 + z_3 + \Delta z_b)/(Z_2 + z_{2b} + Z_1 + z_{1b})\} \tag{20}$$

On the other hand, an impedance between upper and lower energizing contacts 4 and 5 is always constant even if the discharge position Q changes. The relation is represented by the following equation (21).

$$z_{2a} + z_{1a} = z_{2a} + z_{1b} = 2 \cdot z_3 \tag{21}$$

If the above equation (21) is applied to the equation (20), the following equation (22) is obtained.

$$\begin{aligned}
i_{1a}/i_a + i_{2b}/i_b &= (Z_2 + z_3 + \Delta z_a + Z_1 + z_3 + \Delta z_b)/(Z_2 + Z_1 + 2 \cdot z_3) \\
&= (Z_2 + z_3 + Z_1 + z_3)/(Z_2 + Z_1 + 2 \cdot z_3) \\
&\quad + (\Delta z_a + \Delta z_b)/(Z_2 + Z_1 + 2 \cdot z_3) \\
&= 1 + (\Delta z_a + \Delta z_b)/(Z_2 + Z_1 + 2 \cdot z_3) \tag{22}
\end{aligned}$$

Further, the following equation (23) is obtained from the transformation of the above equation (22).

$$i_{1a}/i_a + i_{2b}/i_b - 1 = (\Delta z_a + \Delta z_b)/(Z_2 + Z_1 + 2 \cdot z_3) \tag{23}$$

In the equation (23), $Z_1$ and $Z_2$ of a denominator $(Z_2 + Z_1 + 2 \cdot z_3)$ shows an impedance between the upper energizing contact 4 and the branch point P and an impedance between the lower energizing contact 5 and the branch point P, respectively, and are individually a constant value. Also, impedance $z_3$ between the intermediate point of the wire electrode and the upper energizing contact 4, and between the intermediate point thereof and the lower energizing contact 5, is a constant value.

Therefore, the above denominator is represented as shown in the following equation (24).

$$Z_2 + Z_1 + 2 \cdot z_3 = K \tag{24}$$

Assuming that the denominator $(Z_2 + Z_1 + 2 \cdot z_3)$ of the equation (23) is set as a constant value K, the equation (23) is represented by the following equation (25).

$$i_{1a}/i_a + i_{2b}/i_b - 1 = (\Delta z_a + \Delta z_b)/K \tag{25}$$

Subsequently, in place of the equations (12) and (15) used for obtaining the above equation (25), the following equation (26) is obtained by using the equation (13) relative to the discharge current $i_{2a}$ flowing through the lower energizing contact 5 in the case where a discharge is generated at the discharge position Qa, and the equation (14) relative to the discharge current $i_{1b}$ flowing through the upper energizing contact 4 in the case where a discharge is generated at the discharge position Qb.

$$i_{2a}/i_a + i_{1b}/i_b - 1 = (\Delta z_a + \Delta z_b)/K \tag{26}$$

In this case, a sign becomes converse in $\Delta z_a$ and $\Delta z_b$ of the equations (25) and (26). Therefore, the plus and minus sings of answers obtained from the equations (25) and (26) are converse, and their absolute values become equal to each other.

Thus, by calculating discharge currents $i_{1a}$, $i_{2a}$, $i_{1b}$ and $i_{2b}$, and total discharge currents $i_a$ and $i_b$ per one-time discharge, an answer obtained from the above equations (25) and (26) is a value proportional to the sum of an impedance $\Delta z_a$ from the intermediate point of the wire electrode 1 between the upper energizing contact 4 and the lower energizing contact 5 to the discharge position Qa, and an impedance $\Delta z_b$ from the same to the discharge position Qb, that is, a value proportional to a distance between the discharge positions Qa and Qb.

In other words, if a value obtained from the above equations (25) and (26) is zero "0", the distance between the discharge positions Qa and Qb is "0"; therefore, this means that their discharge positions Qa and Qb are situated on the same position. Thus, the presence of convergence discharge can readily be discriminated by observing a value obtained from the above equation (25) or (26).

As described above, according to the present invention, in a wire electric discharge machine constituted so that a current is supplied to a wire electrode through energizing contacts located above and below a workpiece, a discharge current flowing through one of upper and lower two energizing contacts according to the first discharge of two-time continuous discharges is detected; on the other hand, a discharge current flowing through the other of the two upper and lower energizing contacts by the second discharge thereof is detected. Then, the difference in a discharge position where a discharge is continuously generated two times, is detected on the basis of the detected discharge currents, thereby the present of convergence discharge being discriminated.

Moreover, the present invention constituted as described above is provided with energizing contact current detection means for detecting a current flowing through two energizing contacts, and total current detection means for detecting the total discharge current in a wire electric discharge machine constituted so that a current is supplied to a wire electrode through energizing contacts located above and below a workpiece. A current and the total discharge current flowing through two energizing contacts are determined as a discharge in the case where a discharge is continuously generated two times, by using the foregoing energizing contact current detection means and total current detection means. Then, based on the current values, discharge position difference detection means executes an operation of the sum of a value in which an output of one energizing contact current detection means in the first discharge is divided by an output of the total current detection means, and a value in which an output of the other energizing contact current detection means in the second discharge is divided by an output of the total current detection means, and the difference in discharge positions where a discharge is continuously generated two times is detected according to the operation result, thus the presence of convergence discharge being discriminated.

## Brief Description of the Drawings

Fig. 1 is a view for explaining the principle of the present invention;

Fig. 2 is a view showing the relationship of an impedance at the time a discharge is generated;

Fig. 3 shows a closed circuit in the case where a discharge is generated at the discharge position Qa;

Fig. 4 shows a closed circuit in the case where a discharge is generated at the discharge position Qb;

Fig. 5 is a block diagram showing an embodiment 1 which is one embodiment of the present invention;

Fig. 6 is a time chart of the embodiment 1 of the present invention;

Fig. 7 is a block diagram showing an embodiment 2 which is another embodiment of the present invention;

Fig. 8 is a time chart of the embodiment 2 of the present invention;

Fig. 9 is a block diagram showing an embodiment 3 which is still another embodiment of the present invention;

Fig. 10 is a time chart of the embodiment 3 of the present invention;

## Best Mode for Carrying Out the Invention

(Constitution for carrying out the invention)

[Embodiment 1]

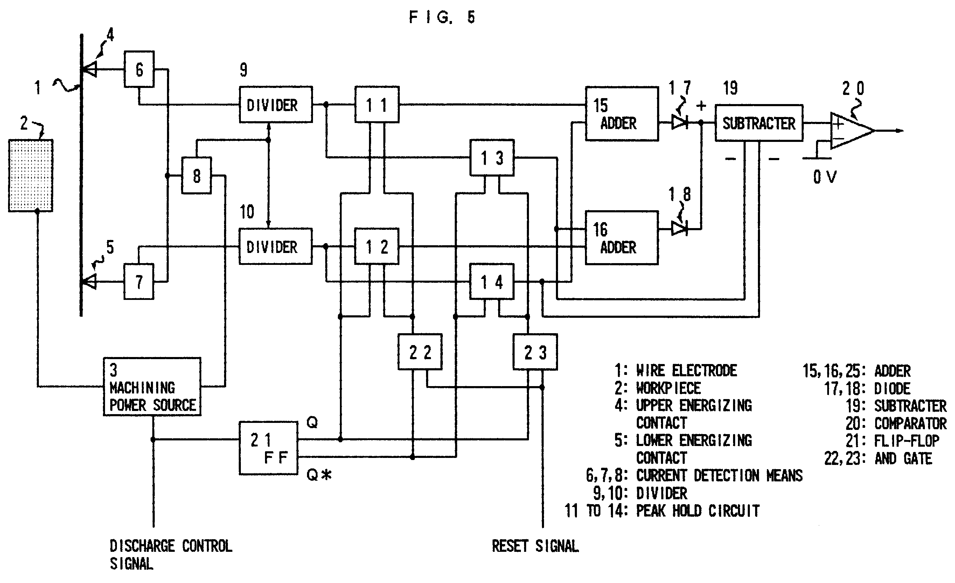

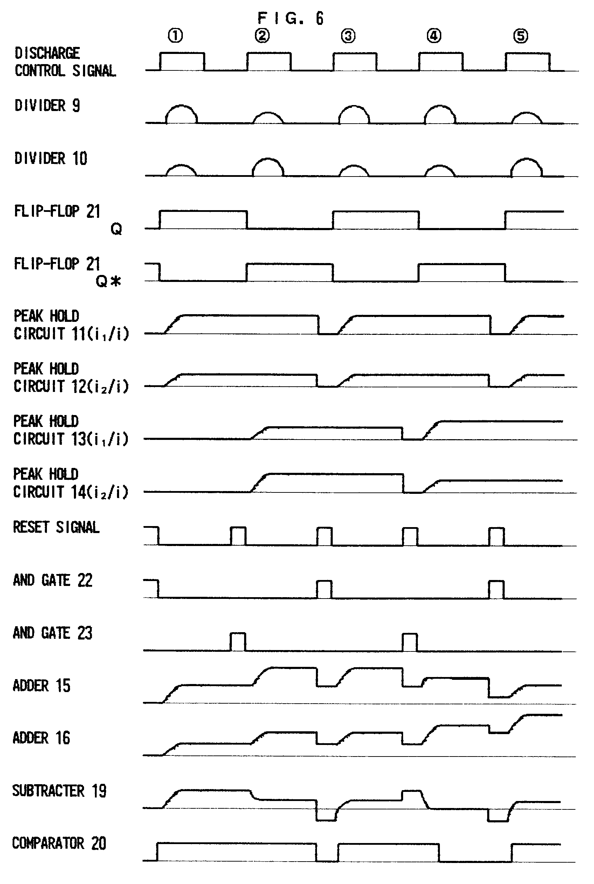

Referring now to Figs. 5 and 6, an embodiment 1 will be described below. Fig. 5 is a block diagram of the embodiment 1 which is one embodiment of the present invention, and Fig. 6 is a time chart of the embodiment 1.

(Constitution of Embodiment 1)

The embodiment 1 is a mode for carrying out the foregoing equations (25) and (26). In Fig. 5, a machining power source 3 is connected between a wire electrode 1 and a workpiece 2. The connection is made as follows: The negative side of the machining power source 3 is connected to upper and lower energizing contacts 4 and 5 to supply a current to the wire electrode 1, and the positive side of the machining power source 3 is connected to the workpiece 2. The machining power source 3 executes an on/off operation when receiving a discharge control signal, and continuously supplies a current to the wire electrode 1 and the workpiece 2. Also, the discharge control signal is inputted to a flip-flop 21.

A discharge current is detected by means of current detection means 6, 7 and 8. The current detection means 6 detects a discharge current $i_1$ flowing through the upper current generator 4, and the current detection means 7 detects a discharge current $i_2$ flowing through the lower current generator 5. The current detection means 8 detects the total discharge current "i" which is the sum of the discharge current $i_1$ detected by the current detection means 6 and the discharge current $i_2$ detected by the current detection means 7. These current detection means 6, 7 and 8 individually output a voltage signal proportional to the magnitude of the respective discharge currents $i_1$, $i_2$ and "i".

Outputs from the current detection means 6 and 7 are individually divided by an output from the current detection means 8 by means of dividers 9 and 10. An output from the divider 9 is inputted to peak hold circuits 11 and 13; on the other hand, an output from the divider 10 is inputted to peak hold circuits 12 and 14. An output Q from the flip-flop 21 is inputted to peak hold circuits 11 and 12. These peak hold circuits 11 and 12 hold the maximum value of an output $i_1/i$ from the divider 9 and the maximum value of an output $i_2/i$ from the divider 10 when the output Q is at a high level. Also, an inversion output $Q^*$ from the flip-flop 21 (the inversion output is hereinafter represented by a symbol *) is inputted to peak hold circuits 13 and 14. These peak hold circuits 13 and 14 hold the maximum value of an output $i_1/i$ from the divider 9 and the maximum value of an output $i_2/i$ from the divider 10 when the output $Q^*$ is at a high level.

Peak hold circuits 11 and 12 are reset by an AND output from an AND gate 22 inputting the output $Q^*$ from the flip-flop 21 and a reset signal. Also, peak hold circuits 13 and 14 are reset by an AND output from an AND gate 23 inputting the output Q from the flip-flop 21 and a reset signal. In this case, the reset signal is outputted from AND gates 22 and 23 finding out the sum of outputs Q and $Q^*$ of the flip-flop 21, so that peak hold circuits 11 and 12, and peak hold circuits 13 and 14 are alternately reset every one-time discharge.

Outputs of the peak hold circuits 11 and 14 are added together by means of an adder 15; on the other hand, outputs of the peak hold circuits 12 and 13 are added by means of an adder 16. Outputs of these adder 15 and 16 are individually supplied to a subtracter 19 through diodes 17 and 18. The subtracter 19 inputs a greater output of the two adders 15 and 16. Also, outputs of the peak hold circuits 13 and 14 are inputted to the subtracter 19, and are subtracted from outputs of the adders 15 and 16. An output of the subtracter 19 is inputted to a comparator 20, and is compared with a reference voltage.

If a place where a discharge is continuously generated two times is the same position, the output of the subtracter 19 is 0 V. So, the reference voltage of the comparator 20 is set slightly higher than 0 V. The magnitude of the reference voltage determines a resolution element for detecting the difference in a discharge position of the embodiment 1.

(Operation of Embodiment 1)

Referring now to a time chart shown in Fig. 6, an operation of the embodiment 1 will be described below. In Fig. 6, discharges according to discharge control signals ③ and ④ are generated at the same position.

When a discharge control signal ① is inputted to the machining power source 3, the machining power source 3 applies a voltage between the workpiece 2 and the wire electrode 1, and a discharge is generated. In a current flowing into the wire electrode 1 by the discharge, a discharge current $i_1$ flowing through the upper energizing contact 4 is detected by means of the current detection means 6; on the other hand, a discharge current $i_2$ flowing through the lower energizing contact 5 is detected by means of the current detection means 7. The total discharge current "i" of the discharge currents $i_1$ and $i_2$ is detected by means of the current detection means 8.

The divider 9 divides the discharge current $i_1$ from the current detection means 6 by the total discharge current "i", and outputs a voltage value corresponding to $i_1/i$. Also, the divider 10 divides the discharge current $i_2$ from the current detection means 7 by the total discharge current "i", and outputs a voltage value corresponding to $i_2/i$. These voltage values corresponding to $i_1/i$ and $i_2/i$ differ according to a discharge position.

The peak hold circuit 11 holds the maximum value of the output from the divider 9 at the timing when the output Q of the flip-flop 21 becomes high. Also, the peak hold 12 holds the maximum value of the output from the divider 10 at the timing when the output Q of the flip-flop 21 becomes high. At this time, peak hold circuits 13 and 14 do not hold the voltage peak because the output Q* of the flip-flop 21 is at a low level, and are reset by an output of the AND gate 23.

In this case, a signal for resetting the peak hold circuits 13 and 14 is outputted from the AND gate 23 when the output Q of the flip-flop 21 and a reset signal are simultaneously at a high level.

Outputs of the peak hold circuits 11 and 14 are inputted to the adder 15. The output of the peak hold circuit 14 is zero in a state of the discharge control signal ①, so that the only output of peak hold circuit 11 is inputted to the adder 15. Also, outputs of the peak hold circuits 12 and 13 are inputted to the adder 16. The output of the peak hold circuit 13 is zero in a state of the discharge control signal ①, so that the only output of peak hold circuit 12 is inputted to the adder 16.

A greater value of the two adders 15 and 16 (in this case, the output of the adder 15) is inputted from a terminal on the addition side of the subtracter 19; on the other hand, there is no input from a terminal on the subtraction side thereof. For this reason, the subtracter 19 outputs an inputted signal inputted as it is; therefore, the comparator 20 outputs "high".

A discharge control signal ② is inputted to the machining power source 3, and then, the next discharge is generated. Assuming that this discharge is generated at a position different from the previous discharge, an output $i_1/i$ of the divider 9 and an output $i_2/i$ of the divider 10 become a value different from their outputs. Outputs of these divider 9 and 10 are held in the peak hold circuits 13 and 14 when the output Q* of the flip-flop 21 is at a high level. In this case, these peak hold circuits 13 and 14 are previously reset by an output of the AND gate 23 inputted a reset signal before the output Q* of the flip-flop 21 becomes a high level.

The adder 15 inputs the previous output $i_1/i$ of the divider 9 held in the peak hold circuit 11 and the present output $i_2/i$ of the divider 10 held in the peak hold circuit 14, and outputs the sum of these outputs. On the other hand, the adder 16 inputs the previous output $i_2/i$ of the divider 10 held in the peak hold circuit 12 and the present output $i_1/i$ of the divider 9 held in the peak hold circuit 13, and outputs the sum of these outputs. Then, a greater value of the two adders 15 and 16 (in this case, the output of adder 15) is inputted from the addition-side terminal of the subtracter 19, and outputs of the peak hold circuits 13 and 14 are inputted from the subtraction-side terminal of the subtracter 19, thus a subtraction being worked. Whereupon, the comparator 20 outputs a high level signal. This is indicative that a place where a discharge is generated is different.

Subsequently, the following is the explanation about a case where a discharge is generated at the same position.

For example, on a premise that discharges according to discharge control signals ③ and ④ are generated at the same position, at that time, outputs of the dividers 9 and 10 according to the discharge control signal ③, and outputs of the dividers 9 and 10 according to the discharge control signal ④, becomes the same magnitude.

In this case, at the point of time of discharge control signal ④, a value of the peak hold circuit 11 and a value of the peak hold circuit 13 become the same. Therefore, a value of the adder 15 and a value of the adder 16 individually become equal to the sum of outputs of the peak hold circuits 13 and 14, so that the output of the subtracter 19 becomes zero. Therefore, an output of the comparator 20 changes from "high" into "low". This is indicative that a discharge is generated at the same position as the previous discharge.

In this case, the output of the comparator 20 becomes "low" according to a reset signal between the discharge control signals ② and ③. In fact, no discharge is generated at the same time a voltage is applied between the wire electrode and the workpiece. For this reason, the output of the comparator 20 overlaps with a discharge control signal when changing from "high" into "low". In consideration of such circumstances, the presence of convergence discharge is discriminated by outputting a pulse at a timing when a discharge control signal falls.

[Embodiment 2]

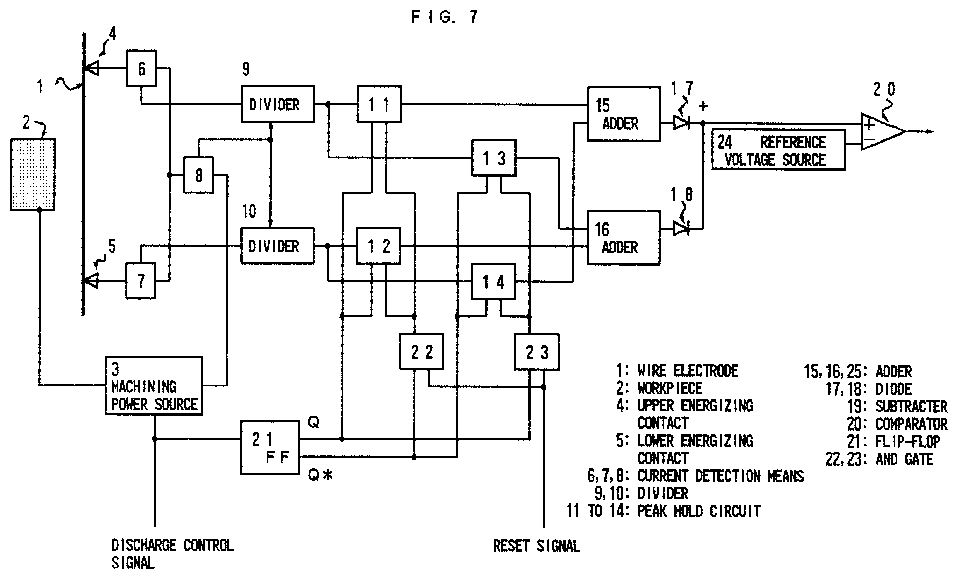

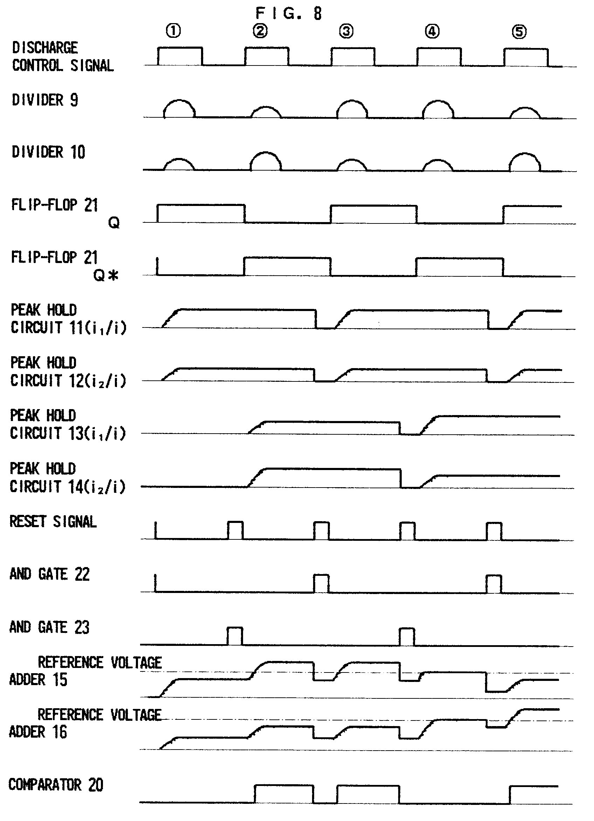

Referring now to Figs. 7 and 8, an embodiment 2 of the present invention will be described below. Fig. 7 is a block diagram of the embodiment 2 which is another embodiment of the present invention, and Fig. 8 is a time chart of the embodiment 2.

(Constitution of Embodiment 2)

The constitution of embodiment 2 is almost the same as that of the foregoing embodiment 1; therefore, only parts different from the foregoing embodiment 1 will be described below.

In Fig. 7, the embodiment 2 has the same configuration between the wire electrode 1 and diodes 17 and 18 through the adders 15 and 16, as that of the foregoing embodiment 1.

Outputs of the adders 15 and 16 are individually supplied to a plus side of the comparator 20 through the diodes 17 and 18, and a greater output of the two adders 15 and 16 is inputted thereto. A reference voltage 24 is connected to a minus side of the comparator 20. The comparator 20 makes a comparison between the output from the adders and a reference voltage, and outputs the comparative result. The reference voltage 24 is equivalent to a subtracted share of the embodiment 1.

(Operation of Embodiment 2)

Referring now to a time chart shown in Fig. 8, an operation of the embodiment 2 will be described below. In Fig. 8, discharges according to discharge control signals ③ and ④ are generated at the same position.

The following is the explanation about an output in the case where a discharge control signal ① is inputted to the machining power source 3. According to the output at this time, outputs of the adders 15 and 16 are obtained in the like manner as the embodiment 1. The comparator 20 makes a comparison between the outputs of the adders 15 and 16 and a reference voltage. In Fig. 8, the reference voltage is shown by a dotted chain line. The output of the comparator 20 becomes "low". In starting a discharge, the output of the comparator 20 becomes "low" as shown in the output of the discharge control signal ①; therefore, a detection is made that a discharge is generated at the same position. For this reason, there is a need of disregarding the output of the comparator according to the first-time discharge control signals when a discharge is started. Thus, in the embodiment 2, an output of the comparator according to a discharge control signal following the second time after the start of a discharge is regarded as a detection signal.

Subsequently, assuming that a discharge control signal ② is inputted to the machining power source 3, and the discharge is generated at a position different from the previous discharge, outputs of the adders 15 and 16 are obtained in the like manner as the embodiment 1. the obtained outputs are inputted to the comparator 20, and an input value (in this case, the output of the adder 15) is compared with a reference voltage. If the input value exceeds the reference voltage, the comparator 20 outputs "high", a detection is made that the discharge position is different.

Next, the following is the explanation about a case where a discharge is generated at the same position. In discharge control signals ③ and ④ shown in Fig. 8, a discharge is generated at the same position. At this time, outputs of the dividers 9 and 10 according to the discharge control signal ④ become the same.

In this case, at the point of time of the discharge control signal ④, values of the peak hold circuit 11 and 13 become the same, and values of the peak hold circuit 12 and 14 become the same. Therefore, values of the adders 15 and 16 become the same voltage, and when the voltage is compared with the reference voltage, the output of the comparator 20 changes from "high" into "low". This is indicative that a discharge is generated at the same position as the previous discharge.

This embodiment 2 does not require locating the subtracter 19, and can carry out the discrimination of convergence discharge by a simple circuit configuration as compared with that of the embodiment 1.

[Embodiment 3]

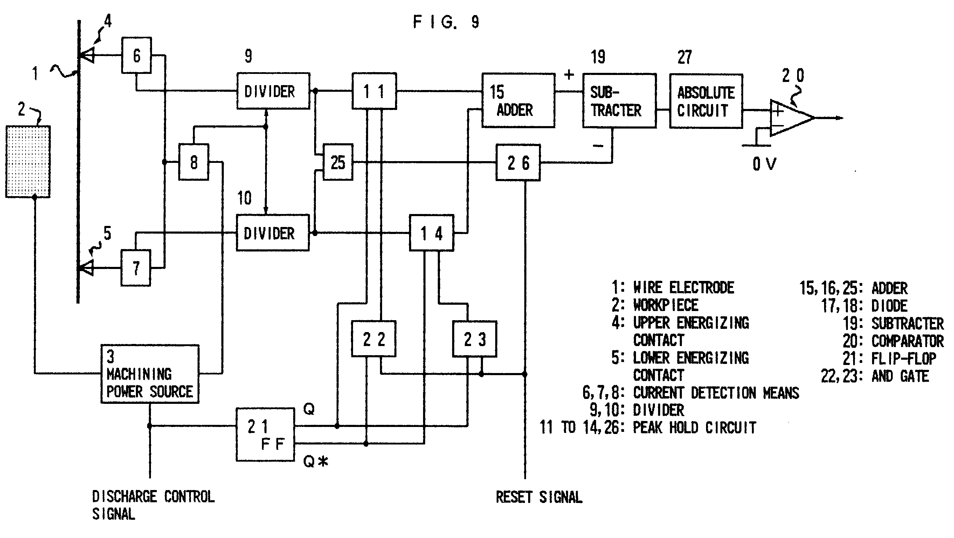

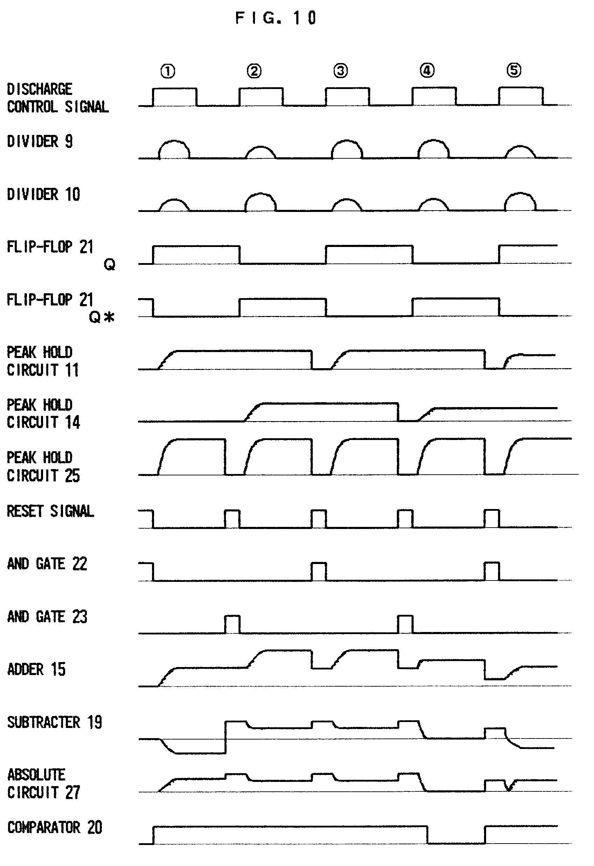

Referring now to Figs. 9 and 10, an embodiment 3 of the present invention will be described below. Fig. 9 is a block diagram of the embodiment 3 which is still another embodiment of the present invention, and Fig. 10 is a time chart of the embodiment 3.

(Constitution of Embodiment 3)

The embodiment 3 is a mode for carrying out either the above equation (25) or (26). The configuration of the embodiment 3 is different from the foregoing embodiments 1 and 2, and the difference is as follows: There is no circuit equivalent to peak hold circuits 12 and 13, but an absolute circuit 27 is included in the configuration.

In Fig. 9, the wire electrode 1, workpiece 2, machining power source 3, upper and lower energizing contacts 4 and 5, current detection means 6, 7 and 8, and dividers 9 and 10, are configured in the like manner as the embodiment 1.

An output of the divider 9 is inputted to the peak hold circuit 11 and an adder 25. Also, an output of the divider 10 is inputted to the peak hold circuit 15 and the adder 25. The maximum value of an output of the adder 25 is held in a peak hold circuit 26. An output Q of the flip-flop 21 is inputted to the peak hold circuit 11. The peak hold circuit 11 holds the maximum value of the output $i_1/i$ of the divider 9 when the output Q is at a high level. Also, an inversion output Q* of the flip-flop 21 is inputted to the peak hold circuit 14. The peak hold circuit 14 holds the maximum value of the output $i_2/i$ of the divider 10 when the output Q* is at a high level.

The peak hold circuit 11 is reset according to an AND output of the AND gate 22 inputting the output Q* of the flip-flop 21 and a reset signal. Also, the peak hold circuit 14 is reset according to an AND output of the AND gate 23 inputting the output Q of the flip-flop 21 and a reset signal. In this case, the reset signal is outputted as the logical sum of the outputs Q and Q* of the flip-flop 21 by the AND gates 22 and 23, so that these peak hold circuits 11 and 14 are alternately reset every one-time discharge.

Outputs of the peak hold circuits 11 and 14 are added together by the adder 15. The adder 15 is connected to a plus-side terminal of the subtracter 19, and the peak hold circuit 26 is connected to a minus-side terminal thereof. Then, an output of the peak hold circuit 26 is subtracted from an output of the adder 15. An output of the subtracter 19 is supplied to the absolute circuit 27 to obtain an absolute value, and the obtained absolute value is inputted to the comparator 20. The comparator 20 makes a comparison between the absolute value and a reference voltage, and outputs the comparative result.

The reason why the absolute circuit 27 is provided is because a sign of the value obtained by the adder 15 becomes converse to a value corresponding to the equation (25) and a value corresponding to the equation (26).

In the case where a discharge is continuously generated at the same position, an output of the subtracter 19 is 0 V; for this reason, a reference voltage of the comparator 20 is set slightly higher than 0 V. This reference voltage determines a resolution element for detecting the difference in the discharge position of the embodiment 3.

(Operation of Embodiment 3)

Referring now to a time chart shown in Fig. 10, an operation of the embodiment 3 will be described below. In Fig. 10, discharges according to discharge control signals ③ and ④ are generated at the same discharge position. When a discharge control signal ① is inputted to the machining power source 3, the divider 9 outputs a voltage value corresponding to $i_1/i$; on the other hand, the divider 10 outputs a voltage

value corresponding to $i_2/i$, in the like manner as the embodiment 1. A voltage value corresponding to $i_1/i$ and $i_2/i$ is different according to a discharge position.

The peak hold circuit 11 holds the maximum value of the output of divider 9 at a timing when the output Q of the flip-flop 21 becomes "high". On the other hand, the peak hold circuit 14 does not execute a peak hold process because the output Q* of the flip-flop 21 is "low", and is reset according to an output of the AND gate 23. In this case, the AND gate 23 outputs a signal for resetting the peak hold circuit 14 when the output Q of the flip-flop 21 and a reset signal are simultaneously "high".

The adder 15 inputs the outputs of the peak hold circuits 11 and 14; however, the output of the peak hold circuit 14 is zero in the case of the discharge control signal ①. Therefore, the only output of the peak hold circuit 11 is inputted to the pluse-side terminal of the subtracter 19. On the other hand, a peak hold value, which is a value adding outputs of the dividers 9 and 10, is inputted to the minus-side terminal of the subtracter 19. Thus, the subtracter 19 outputs a value corresponding to the peak hold value of the divider 10, and then, the outputted value is converted into a positive value in the absolute circuit 27. Thereafter, the comparator 20 makes a comparison between the value and the reference voltage, and outputs "high".

Subsequently; the discharge control signal ② is inputted to the machining power source 3, and the next discharge operation is executed. Assuming that the discharge is generated at a position different from the previous discharge, the output $i_1/i$ of the divider 9 and the output $i_2/i$ of the divider 10 become a value different from the previous outputs. Thus, the peak hold circuit 11 holds the previous output of the divider 9 as it is; on the other hand, the peak hold circuit 14 holds the output of the divider 10 according to a timing when the output Q* of the flip-flop 21 becomes "high".

The adder 15 inputs the previous output $i_1/i$ of the divider 9 held in the peak hold circuit 11 and the present output $i_2/i$ of the divider 10 held in the peak hold circuit 14, and supplies the sum of these outputs to the plus-side terminal of the subtracter 19. Meanwhile, a peak hold value of a value added outputs of the dividers 9 and 10 is inputted to the minus-side terminal of the subtracter 19. At this time, the comparator 20 outputs "high", and this is indicative that a discharge position is different.

Next, the following is an explanation about a case where a discharge is generated at the same position. In Fig. 10, discharges according to discharge control signals ③ and ④ are generated at the same position. At this time, outputs of the dividers 9 and 10 in the discharge control signal ③ and outputs of the dividers 9 and 10 in the discharge control signal ④ become the same.

In this case, at the point of time of the discharge control signal ④, a value of peak hold circuit 11 and a value of peak hold circuit 14 are individually the same as the previous value. Therefore, the output of the adder 15 becomes equal to the output value of the peak hold circuit 26 at point of time of the discharge control signals ④. Thus, an output of the subtracter 19 becomes zero "0". For this reason, the output of the comparator 20 changes from "high" into "low". This is indicative that a discharge is generated at the same position as the previous discharge.

In the foregoing embodiment, the total discharge current is detected by means of the current detection means 8. However, the total discharge current may be obtained by adding outputs of the current detection means 6 and 7.

(Effect of embodiments)

In the embodiments according to the present invention, the difference in a position where a discharge is generated is always detected during electric discharge machining, so that the presence of convergence discharge can be detected in real time without a time lag. Therefore, it is possible to readily prevent a wire electrode from being disconnected by the convergence discharge.

Further, the difference in a position where a discharge is continuously generated two times is outputted as a voltage in response to the difference, so that the voltage output becomes 0 V or constant in the case where a discharge is continuously generated at the same position. Therefore, the presence of convergence discharge can be readily discriminated.

As described above, the present invention can reduce components such as a comparator and a reference voltage source, and can detect the presence of convergence discharge by a small number of components.

**Claims**

1. A convergence discharge discrimination apparatus in a wire electric discharge machine constituted so that a current is supplied to a wire electrode through each of two energizing contacts located above and below a workpiece, comprising:

(a) energizing contact current detection means for detecting a current flowing through said two energizing contacts;

(b) total current detection means for detecting the total discharge current; and

(c) discharge position difference detection means for detecting the difference in a position where a discharge is continuously generated two time, on the basis of an output of said energizing contact current detection means and an output of said total current detection means, these outputs which are obtained when a discharge is continuously generated two times,

the presence of convergence discharge being discriminated according to an output of said discharge position difference detection means.

2. The convergence discharge discrimination apparatus in a wire electric discharge machine according to claim 1, wherein said discharge position difference detection means includes an operation of the sum of a value in which an output of one energizing contact current detection means according to a first discharge is divided by an output of said total current detection means, and a value in which an output of the other energizing contact current detection means according to a second discharge is divided by an output of said total current detection means.

3. A convergence discharge discrimination apparatus in a wire electric discharge machine constituted so that a current is supplied to a wire electrode through each of two energizing contacts located above and below a workpiece, comprising:

(a) energizing contact current detection means for detecting a current flowing through said two energizing contacts;

(b) total current detection means for detecting the total discharge current;

(c) means for detecting currents flowing through said two energizing contacts and the total discharge current in the case where a discharge is continuously generated two time; and

(d) discharge position difference detection means including an operation of the sum of a value in which an output of one energizing contact current detection means according to a first discharge is divided by an output of said total current detection means, and a value in which an output of the other energizing contact current detection means according to a second discharge is divided by an output of said total current detection means,

the presence of convergence discharge being discriminated by detecting the difference in a position where a discharge is continuously generated two times according to the operation result.

4. The convergence discharge discrimination apparatus in a wire electric discharge machine according to claim 3, wherein said discharge position difference detection means includes an operation for subtracting a value which is obtained by dividing the output of said energizing contact current detection means by the output of the total current detection means, and which is obtained according to either of discharges which are continuously generated two times, from said sum.

5. The convergence discharge discrimination apparatus in a wire electric discharge machine according to claim 3, wherein said discharge position difference detection means
includes an operation for subtracting a preset value from said sum.

6. The convergence discharge discrimination apparatus in a wire electric discharge machine according to claim 3, wherein said discharge position difference detection means
includes an operation for choosing greater one between values of the sum continuously obtained.

7. The convergence discharge discrimination apparatus in a wire electric discharge machine according to claim 3, wherein said discharge position difference detection means
includes an operation for the sum of the only value in which an output of one energizing contact current detection means according to a first discharge is divided by an output of said total current detection means, and the only value in which an output of the other energizing contact current detection means according to a second discharge is divided by an output of said total current detection means.

8. A convergence discharge discrimination method in a wire electric discharge machine constituted so that a current is supplied to a wire electrode through each of two energizing contacts located above and below a workpiece, comprising the steps of:

(a) detecting a discharge current flowing through one of two energizing contacts according to a first discharge in the case where a discharge is continuously generated two times, and a discharge current flowing through the other of two energizing contacts according to a second discharge in the case where a discharge is continuously generated two times; and

(b) detecting the difference in a position where a discharge is continuously generated two times, on the basis of the detected discharge current, thereby discriminating the presence of convergence discharge.

9. A convergence discharge discrimination method in a wire electric discharge machine constituted so that a current is supplied to a wire electrode through each of two energizing contacts located above and below a workpiece, comprising the steps of:

(a) detecting a current flowing through each of two energizing contacts;

(b) detecting a total discharge current;

(c) detecting a current and a total discharge current which flow through said two energizing contacts in the case where a discharge is continuously generated two times;

(d) making an operation of the sum of a value in which an output of one energizing contact current detection means according to a first discharge is divided by an output of said total current detection means, and a value in which an output of the other energizing contact current detection means according to a second discharge is divided by an output of said total current detection means; and

(e) detecting the difference in a position where a discharge is continuously generated two times, on the basis of the operation result, thereby discriminating the presence of convergence discharge.

F I G. 1

F I G. 2

## FIG. 3

## FIG. 4

F I G. 5

1: WIRE ELECTRODE
2: WORKPIECE
4: UPPER ENERGIZING
   CONTACT
5: LOWER ENERGIZING
   CONTACT
6,7,8: CURRENT DETECTION MEANS
9,10: DIVIDER
11 TO 14: PEAK HOLD CIRCUIT

15,16,25: ADDER
17,18: DIODE
19: SUBTRACTER
20: COMPARATOR
21: FLIP-FLOP
22,23: AND GATE

DISCHARGE CONTROL
SIGNAL

RESET SIGNAL

EP 0 678 356 A1

# FIG. 6

① ② ③ ④ ⑤

DISCHARGE
CONTROL SIGNAL

DIVIDER 9

DIVIDER 10

FLIP-FLOP 21
Q

FLIP-FLOP 21
Q*

PEAK HOLD
CIRCUIT 11($i_1/i$)

PEAK HOLD
CIRCUIT 12($i_2/i$)

PEAK HOLD
CIRCUIT 13($i_1/i$)

PEAK HOLD
CIRCUIT 14($i_2/i$)

RESET SIGNAL

AND GATE 22

AND GATE 23

ADDER 15

ADDER 16

SUBTRACTER 19

COMPARATOR 20

F I G. 7

1: WIRE ELECTRODE
2: WORKPIECE
4: UPPER ENERGIZING CONTACT
5: LOWER ENERGIZING CONTACT
6,7,8: CURRENT DETECTION MEANS
9,10: DIVIDER
11 TO 14: PEAK HOLD CIRCUIT

15,16,25: ADDER
17,18: DIODE
19: SUBTRACTER
20: COMPARATOR
21: FLIP-FLOP
22,23: AND GATE

24 REFERENCE VOLTAGE SOURCE
3 MACHINING POWER SOURCE
DISCHARGE CONTROL SIGNAL
RESET SIGNAL

F I G. 8

FIG. 9

1: WIRE ELECTRODE
2: WORKPIECE
4: UPPER ENERGIZING CONTACT
5: LOWER ENERGIZING CONTACT
6,7,8: CURRENT DETECTION MEANS
9,10: DIVIDER
11 TO 14,26: PEAK HOLD CIRCUIT
15,16,25: ADDER
17,18: DIODE
19: SUBTRACTER
20: COMPARATOR
21: FLIP-FLOP
22,23: AND GATE

## F I G. 1 0

| | International application No. |
|---|---|
| | PCT/JP94/01686 |

**A. CLASSIFICATION OF SUBJECT MATTER**

Int. Cl$^6$  B23H1/02

According to International Patent Classification (IPC) or to both national classification and IPC

**B. FIELDS SEARCHED**

Minimum documentation searched (classification system followed by classification symbols)

Int. Cl$^5$  B23H1/02, B23H7/02, B23H7/04

Documentation searched other than minimum documentation to the extent that such documents are included in the fields searched

| Jitsuyo Shinan Koho | 1926 – 1994 |
|---|---|
| Kokai Jitsuyo Shinan Koho | 1971 – 1994 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 4-41125 (Mitsubishi Electric Corp.), February 12, 1992 (12. 02. 92), Line 12, lower left column, page 3 to line 1, upper right column, page 4, Fig. 1, (Family: none) | 1-9 |
| A | JP, A, 62-15017 (Hitachi Seiko Co., Ltd.), January 23, 1987 (23. 01. 87), Line 5, lower right column, page 2 to line 19, upper right column, page 3, Fig. 1, (Family: none) | 1-9 |
| A | JP, A, 53-64899 (Inoue Japax Research Inc.), June 9, 1978 (09. 06. 78), Line 1, upper left column, page 2 to line 5, lower left column, page 3, Fig. 1, (Family: none) | 1-9 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| December 12, 1994 (12. 12. 94) | January 10, 1995 (10. 01. 95) |

| Name and mailing address of the ISA/ | Authorized officer |
|---|---|
| Japanese Patent Office | |
| Facsimile No. | Telephone No. |